# EUROPEAN PATENT APPLICATION

(11) **EP 2 040 210 A1**
(43) Date of publication of application: **25.03.2009**
(21) Application number: 08164371.0
(22) Date of filing: 15.09.2008
(51) Int. Cl.: G06Q 10/00

(54) **System for fusing information from assets, networks and automated behaviors**

(30) Priority: 17.09.2007 US 856532
(71) Applicant: Honeywell International Inc., Morristown, NJ 07962 (US)
(72) Inventor: Buster, Duke, Albuquerque, NM 87122 (US); Gerlock, Derick, Albuquerque`, NM 87114 (US)
(74) Representative: Buckley, Guy Julian

(57) **Abstract**

A system for fusing information from disparate data sources is disclosed. The system comprises a database module operative to maintain an information database identifying one or more items-of-interest, and a situation display module in operative communication with the database module. An asset data plugin is in operative communication with the database module, and an asset communications plugin is operatively coupled to the asset data plugin. The asset communications plugin is configured to communicate with one or more assets. A messages plugin is in operative communication with the database module, and a network communications plugin is operatively coupled to the messages plugin. The network communications plugin is configured to communicate with one or more networks. An automated behaviors plugin is in operative communication with the database module, the asset communications plugin, and the network communications plugin. The situation display module, the asset data plugin, the messages plugin, and the automated behaviors plugin are all configured to transmit one or more items-of-interest to the database module or listen for one or more items-of-interest in the database module.

## Description

### RELATED APPLICATION

This application is related to commonly assigned U.S. Patent Application Serial No. 11/856529 (Honeywell Docket No. H0015297), filed on even date herewith, and which is incorporated herein by reference.

### BACKGROUND

A user of informational data such as a soldier or civilian in the field needs a single coherent picture of his or her situation. The user needs data from maps, nearby sensor assets, message networks, and automated support functions. However, content, format and update rates of such data is different between sources.

Informational data is available in many different forms, such as sensor telemetry, detector data, photos, videos, digital messages, and map data. Nevertheless, soldiers or civilians in the field do not currently have a single, easy access point to situation awareness information, and no single point of control over assets and messaging. In addition, there are no automated support functions to help field users operate all of the assets and messaging functions.

Currently, the user must combine field data in his or her own head, or can utilize custom software that has been written to combine specific data types. Conventional assets and message networks have separate custom interfaces and communications equipment. This forces a field user to carry much equipment.

Some conventional data acquisition systems are hardwired to a fixed set of data types. In such systems, new data types can only be added by changing the existing system architecture. Other systems are hardwired to mix map features (e.g., waypoints, targets, etc.) with UAV/sensor tracks.

There are a number of industry robot control stations that control multiple robots simultaneously. But, these are limited to sensor feeds only, without message networks and automated functions. In addition, there are a number of U.S. Army Command and Control stations in use with planning functions, but these do not combine unmanned assets and wireless network data into a single presentation for a user. Further, current assets and message networks are not easily configured for different missions.

### SUMMARY

The present invention relates to a system for fusing information from disparate data sources. The system comprises a database module operative to maintain an information database identifying one or more items-of-interest, and a situation display module in operative communication with the database module. An asset data plugin is in operative communication with the database module, and an asset communications plugin is operatively coupled to the asset data plugin. The asset communications plugin is configured to communicate with one or more assets. A messages plugin is in operative communication with the database module, and a network communications plugin is operatively coupled to the messages plugin. The network communications plugin is configured to communicate with one or more networks. An automated behaviors plugin is in operative communication with the database module, the asset communications plugin, and the network communications plugin. The situation display module, the asset data plugin, the messages plugin, and the automated behaviors plugin are all configured to transmit one or more items-of-interest to the database module or listen for one or more items-of-interest in the database module.

### BRIEF DESCRIPTION OF THE DRAWINGS

Features of the present invention will become apparent to those skilled in the art from the following description with reference to the drawings. Understanding that the drawings depict only typical embodiments of the invention and are not therefore to be considered limiting in scope, the invention will be described with additional specificity and detail through the use of the accompanying drawings, in which:
Figure 1 is a schematic diagram of an information fusing system that can be utilized to implement the sharing of information in a network;
Figure 2 is a schematic diagram of a software plugin system that can be implemented for plugins used in the system of Figure 1;
Figure 3 is a schematic diagram of an exemplary asset plugin system;
Figure 4 is a hierarchy diagram showing exemplary groupings of message plugins;
Figure 5 is a schematic diagram of an information fusing system that is implemented with an automated function to point the nearest camera at a reported intruder;
Figure 6 is a schematic diagram of an information fusing implementation in which a user builds a route plan on a map;
Figure 7 is a schematic diagram of an information fusing implementation in which an automated function alerts a user when a new task has arrived;
Figure 8 is a schematic diagram of an exemplary field use of an information fusing system in a military operation; and
Figure 9 is a schematic diagram of an exemplary situation display screen that can be used in an information fusing system.

### DETAILED DESCRIPTION

In the following detailed description, embodiments are described in sufficient detail to enable those skilled in the art to practice the invention. It is to be understood that other embodiments may be utilized without departing from the scope of the present invention. The following detailed description is, therefore, not to be taken in a limiting sense.

The present invention generally provides a system for fusing information from assets, networks, and automated behaviors. This allows for sharing information between disparate data sources having different software functions. The present system utilizes a situation software architecture that includes a hierarchy of items-of-interest (IOIs) that are maintained to provide a single coherent situation picture to a field user. The system also provide for controlling assets in the field, sending data over message networks, and implementing automated behaviors to reduce user workload.

The present situation software architecture includes software "plugins" for field assets, messaging (e.g., mail boxes and instant messaging (IM)), automated behaviors, maps, and displays such as graphical user interfaces (GUIs). A software "plugin" is a computer program that interacts with a host application to provide a certain function on demand. An items-of-interest database provides for sharing information between the plugins. Standard perspective displays (e.g., GUIs) can be used to present data and controls for situation evaluation, planning, and messages.

The present system provides a single point for a user to see data fused from disparate sources, and provides a single point for a user to control assets and messaging (e-mail and IM). The situation software architecture makes map, asset, and message data available to automated behavior plugins. The software plugins and items-of-interest allow functions to be added or removed without recompiling the code in the rest of the system. This is an important feature for upgrades in the field, and provides for inexpensive product modifications and additions.

In one aspect, the present system provides components of a command and control system with a way to discover important or relevant data. A shared location is utilized to post IOIs with enough information that the components of the system can decide if one or more of the items are important. If the one or more items are important, a component can go to the data source for more information. In one implementation, the present system can be utilized as part of the software package for a network system, such as the network-enabled operator station (NEOS), which is being developed by Honeywell.

Unlike conventional techniques, the present invention provides an architecture that is not hardwired to a fixed set of data types. In addition, new data types can be added without changing the existing system, and the IOIs permit large systems where functions can be added or removed without changing information sharing protocols. Further, data can be exchanged between functions without direct user action, which reduces the burden on the user. The IOIs gives the user a unique way of inserting data, and information with different levels of security can be segregated.

As used herein, an "item-of-interest" (IOI) is a public synopsis or summary of interesting and useful information. In general the present system can be used to summarize information in the form of an IOI, post the IOI, and alert other users of the IOI. All IOIs are available through a single, common information distribution method such that any software function can create and post an IOI, any software function can listen for IOIs being added or removed, and any software function can listen for changes in an IOI. The software functions all share data from the same location, and the data is summarized into a common, shareable format in the form of an IOI.

Further details of the system of the present invention are described hereafter with respect to the drawings.

### Software Architecture

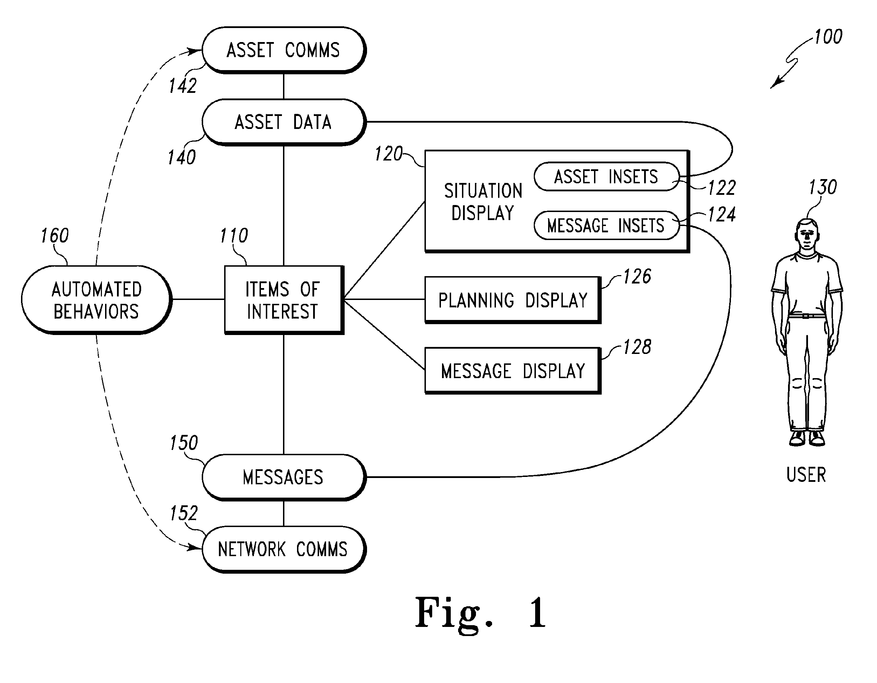

Figure 1 illustrates the architecture of an information fusing system 100 that can be utilized to implement the sharing of information in a network. The data used in system 100 stays the same, regardless of user display style. The system 100 also provides good encapsulation for software changes. The system 100 can be implemented on a computer platform such as a workstation or laptop computer, a tablet computer, a personal digital assistant (PDA), or the like. The computer platform can be ruggedized for the field by use of padding, a magnetic stylus, long-life batteries, etc. The computer platform can have a standard operating system that supports the data fusion functions of system 100, such as windowing, security, soft real-time, and the like.

The system 100 includes a database module 110 operative to maintain an information database identifying one or more items-of-interest. A situation display module 120 is in operative communication with database module 110. The situation display module 120 includes an asset insets plugin 122 and a message insets plugin 124. A planning display module 126 and a message display module 128 are also in operative communication with database module 110. The various display modules provide GUIs to a user 130.

The database module 110 provides a single collection point where all items-of-interest can be accessed. As such, database module 110 provides fusion functions that allow items to be passed between assets, networks, and maps, but does not have any functions saying what to do with the IOIs. That is handled by other functional modules in the system. For example, the situation display module 120 has to know what icons to draw for the different types of IOIs. The IOIs can be used to display information to the user, and allow the user to tailor a display screen to show the information that is needed.

The IOIs are posted and maintained on a shared "blackboard" in database module 110. The blackboard is a conventional software object that provides a way to share information with all other users in the network by providing a shared repository of IOIs, which can be thought of as a dynamic "library" of information contributions recently "published" by information sources such as IOI owners. Other components in the network can listen to the shared blackboard to find out what IOIs are available. Listener components get notified when an IOI is added, changed, or deleted, and the listener components can respond by taking action. The network has a single shared blackboard for the IOIs, allowing every network component to get access to every IOI.

The IOIs are organized into a hierarchy of simple logical groups. This makes it easier for other software functions to filter out items that are not interesting, and to get common information that is desired. Exemplary IOIs include waypoint, route, target, point symbol, area symbol, symbol laydown, corridor/zone (e.g., no-fly zone), friendly location or track, entity track, unit, asset (e.g., UAV), asset detection, sensor detection, event (e.g., deadline), assignment, schedule, action, threat (e.g., mine), terrain feature (e.g., bridge), storm, snow cover, etc. Network components use such IOIs to discover data of interest for the user.

Additional details related to techniques for using IOIs can be found in copending U.S. Patent Application Serial No. (Honeywell Docket No. H0015297).

The situation display module 120 is configured to transmit one or more IOIs to database module 110 or listen for one or more IOIs in database module 110. The situation display module 120 provides a display of useful information to a field user such that the user has a single place to understand what is happening in his or her environment. The situation display module 120 has a windows and controls program in order to manage the windows on a display screen for a user, such that the display screen shows as much situation information as possible while minimizing the controls. The situation display module 120 pulls data from database module 110 when needed, and also pushes data when a user creates an IOI.

The situation display module 120 can display maps with icons for assets, network reports, and items-of-interest. The user can pick assets or messaging to show in "watch windows." For example, a thumbnail view of asset data or message summaries can be shown in such a watch window. If a plugin provides a watch window, then the display screen can show the watch window. The user can also pick assets or messaging to show in "control windows," which provide simplified controls for assets or messaging. If a plugin provides a control window, then the display screen can show the control window. The user can also pick the arrangement of windows. The situation display module 120 can also show past and present alerts, and pop-up boxes with notes for the user.

The situation display module 120 can further show a user's location (e.g., by a global positioning system (GPS) or manual entry), show coordinates for points on a map, and create routes from waypoints. A map functions program in situation display module 120 can be used to provide image import and display, and can coordinate transformations. For example, the map functions program can import and geo-register map images and terrain data of an area; draw, pan, and zoom on maps; show icons for IOIs; and coordinate translations. In addition, a symbology program for network and asset information provides symbol overlays from items-of-interest. The symbology program can be used to expand an icon to see additional information, and provides clutter control settings to reduce icons on a map (e.g., filter IOIs by their attributes).

The planning display module 126 lets the user 130 view and edit plans running on the network, as well as create new plans. The planning display module 126 is useful to someone making a decision or completing an assignment. Exemplary categories of plans include: control measures - commands to do or not do something (e.g., medivac request, no-fly zone, etc.); travel routes for individuals or units; schedules with tasks assigned to individuals or units; and assignments of individuals and/or vehicles to organizational units. The planning display module 126 can show map(s) for plans that involve locations (e.g., control measures, routes, etc.), and the user can selects maps to display. The user can also pick the category of plan to create or edit, and then create or edit the plan of the selected category. Automated planners are also provided that assist the user. For example, a UAV route planner stops the user from putting a route waypoint in a no-fly zone.

The message display module 128 provides a windows and controls program for displaying network information such as windows to display and create network reports including a list of all incoming network messages ("inbox") and a list of all outgoing network messages ("sent box"). This allows users to pick reports by source, time, report type, sender; etc., and show the contents of selected messages. The message display module 128 also provides window sequences to create a message by selecting items-of-interest in database module 110, and can create reports related to available devices status, such as name, frequency, device type, etc. The message display module 128 may also be used to push data when a report is created and sent.

As used herein, an "asset" is a device that provides data (e.g., sensors) and/or accepts commands. Every asset must have some communications function. A software plugin is provided per type of asset. Exemplary field assets that generate data include small unmanned aerial vehicles (UAVs) such as micro-air vehicles (MAVs) and organic air vehicles (OAVs), unmanned ground vehicles (UGVs), robots, security cameras, security gates, personnel trackers, personnel navigation systems, vehicle health sensors, unattended ground sensors (UGS), and the like. Every asset should post its data as an item-of-interest for the rest of the software to discover. Simple assets, such as GPS, may not have any displays. Instead, all of their data is posted in the items-of-interest. Most assets such as pan/tilt/zoom video cameras will provide a watch window and a control window in the situation display. Complicated assets, such as UAVs, will have their own display.

As further shown in Figure 1, an asset data plugin 140 is in operative communication with asset insets plugin 122 and with database module 110. The asset data plugin 140 is also operatively coupled to an asset communications plugin 142. An API and objects to store/retrieve asset-specific data are provided in asset data plugin 140. The data can include basic asset data such as asset name/ID, type, owner, location; sensor data such as communication link status, mode, position, reports, live video, live audio, recorded video, recorded audio, etc. The asset data plugin 140 can be used as a "billboard" for data, and can provide flags shared by asset functions. The asset data plugin 140 can also have an asset data instance for each asset communicating with system 100.

The asset communications plugin 142 communicates with one or more assets including asset hardware. An API is provided in asset communications plugin 142 to talk to an asset, including functions to get/send data to an asset, and to handle timing, protocol, etc. for the asset. The asset communications plugin 142 also keeps a list of available assets, has protocol translators, and has drivers for radios, video decoders, and the like.

A messages plugin 150 is in operative communication with message insets plugin 124 and with database module 110. The messages plugin 150 is also operatively coupled to a network communications plugin 152. An API and objects to store/retrieve messages are provided in messages plugin 150. The messages plugin 150 provides a history of messages sent and received (e.g., "inbox" and "outbox"). Such messages may have attachments such as annotated images. The messages can be grouped by message type (e.g., medivac, request for support, etc.). The messages plugin 150 also provides an address book of individuals and groups that a user can send data to, which is set by configuration data at system initiation.

The network communications plugin 152 communicates with one or more networks including network hardware, and provides utilities to send and receive messages across wireless or wired networks. These utilities hide details for protocols (e.g., variable message format (VMF), Link-16) and drivers to real devices (e.g., radios, LAN). An API is provided in network communications plugin 152 for data fusion control functions to get/send data to a network.

An automated behaviors plugin 160 is in operative communication with database module 110, as well as with asset communications plugin 142 and network communications plugin 152. The automated behaviors plugin 160 can listen to items-of-interest, and can respond with commands or the creation of new items-of-interest. The automated behaviors plugin 160 also can issue commands directly to asset(s) or messaging functions. Many automated behaviors run in the background, so they do not have any displays.

The automated behaviors plugin 160 provides asset-specific functions that run without user direction. For example, asset-specific functions can generate symbology overlays for video, calculate coordinates of a terrain point under UAV crosshairs, provide automatic target tracking in UAV video, etc. The automated behaviors plugin 160 also provides network functions that respond to network data and IOIs without user direction. For example, automated behaviors plugin 160 can automatically add incoming target reports to IOIs, automatically send reports when a target IOI is updated, or provide other automated functions. Other exemplary automated behaviors include: automatically turning the closest camera to look at an object triggering a motion detector; automatically flying a UAV to watch a reported target; and automatically ordering parts for a vehicle when its sensors report a failure.

### System Operation

During operation of system 100, if a network component such as a field asset has some data that could be interesting or useful to the rest of the network, the component creates and maintains an IOI and posts it on the shared blackboard in database module 110. In addition, assets can be monitored and controlled, and messages can be received and sent.

In monitoring assets, system 100 first checks that a user has permission to listen to assets by type that are plugged into the system, such as a UAV, personnel navigation system, etc. The system 100 then automatically searches for assets within range, and lists available assets so the user can select one or more of the assets. The assets are shown to the user on a display screen, which can automatically receive and record telemetry data and reports, in a listen-only mode. The user can watch asset sensor feeds (if any) and the user can pick assets for sensor feeds. The user can watch and/or record simultaneous video sources (e.g., remote video terminal), and can watch and/or record simultaneous audio sources (e.g., UGS microphone in a building).

In controlling assets, system 100 first checks that the user has permission to command an asset, such as checking an asset name or ID set in a user permissions file. The system 100 automatically searches for assets within range, and lists available assets so the user can select one or more of the assets. The assets are shown to the user on a display screen, and the user selects an asset to control. The user picks one asset at a time to control, and a control panel is displayed for the user so that commands can be sent to the asset.

In order to receive messages, system 100 first checks that the user has permission to listen to available networks. The system 100 automatically receives incoming reports from all of the available networks. Display icons are presented on the display screen representing the report data, and the user may select a report for more details.

In order to send messages, system 100 first checks that the user has permission to talk to available networks. The user can send manually-directed reports by selecting the report type to send and the recipients, and by filling in the report fields. If a location is required, the user can select one or more points from a map and then send the report. The system 100 can also send automatic reports. The system 100 filters items-of-interest on the situation display for special types (e.g., a target). The user can set the special types at configuration time. The system 100 automatically creates a report and fills in the field with the item data. The report is then automatically sent.

### Software Plugins

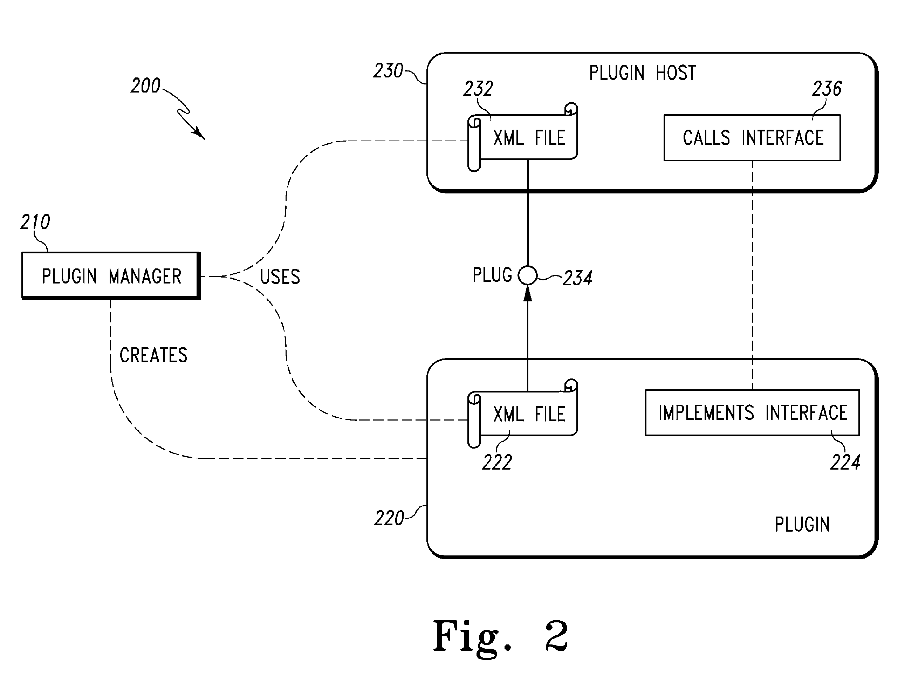

Figure 2 is a schematic diagram of a software plugin system 200 that can be implemented for the plugins used in system 100. Each plugin used in system 100 has a folder under a directory where the software architecture looks. A plugin manager 210 creates a particular plugin 220. The plugin 220 has an xml file 222 that describes how to run this plugin, the plugs offered by this plugin, and the plugs fit by this plugin (i.e., where it "plugs in"). The plugin 220 has an interface implementing program 224 to implement an interface offered by the software architecture or another plugin (so the software knows how to call the plugin). Such interfaces are called "plugs." A plugin host 230 has an xml file 232 that offers a plug 234 for plugin 220. The xml file 222 is coupled to xml file 232 through plug 234. The plugin host 230 also has a calls interface program 236 in operative communication with program 224. The plugin manager 210 uses the xml files 222 and 232 to create and run plugins on demand.

The present software architecture offers these plugs: perspective, asset type, mail protocol, instant messaging (IM) protocol, and behavior. The software architecture finds and initializes the plugins when an application is run.

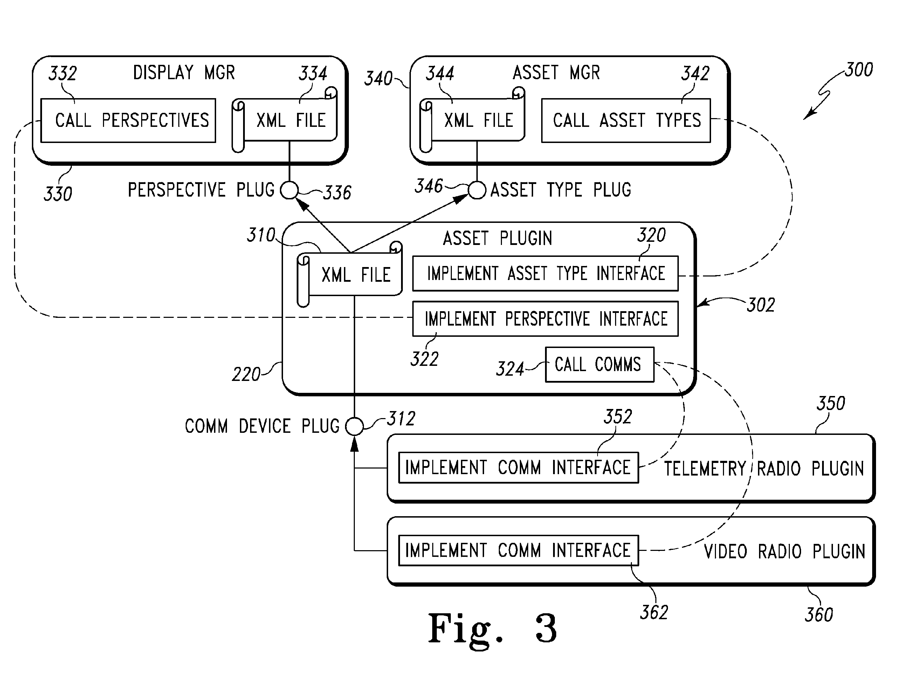

Figure 3 is a schematic diagram of an exemplary asset plugin system 300 that fits two plugs, and offers one plug. The asset plugin system 300 includes an asset plugin 302 having an xml file 310 that offers a communication device plug 312. The plugin 302 also includes a program 320 to implement an asset type interface, a program 322 to implement a perspective interface, and a call communications program 324. The asset plugin 302 can be configured for various assets such as an unmanned aerial vehicle, an unattended ground sensor, an unmanned ground vehicle, or a personnel tracker.

A display manager module 330 has a call perspectives program 332 that operatively communicates with program 322 of plugin 302. An xml file 334 in display manager module 330 offers a perspective plug 336 for plugin 302. An asset manager module 340 has a call asset types program 342 that operatively communicates with program 320 of plugin 302. An xml file 344 in asset manager module 340 offers an asset type plug 346 for plugin 302.

A telemetry radio plugin 350 has a program 352 to implement a communications interface, which operatively communicates with call communications program 324 of plugin 302. The telemetry plugin 350 is coupled to communication device plug 312 of plugin 302. A video radio plugin 360 has a program 362 to implement a communications interface, which operatively communicates with call communications program 324 of plugin 302. The video radio plugin 360 is also coupled to communication device plug 312 of plugin 302.

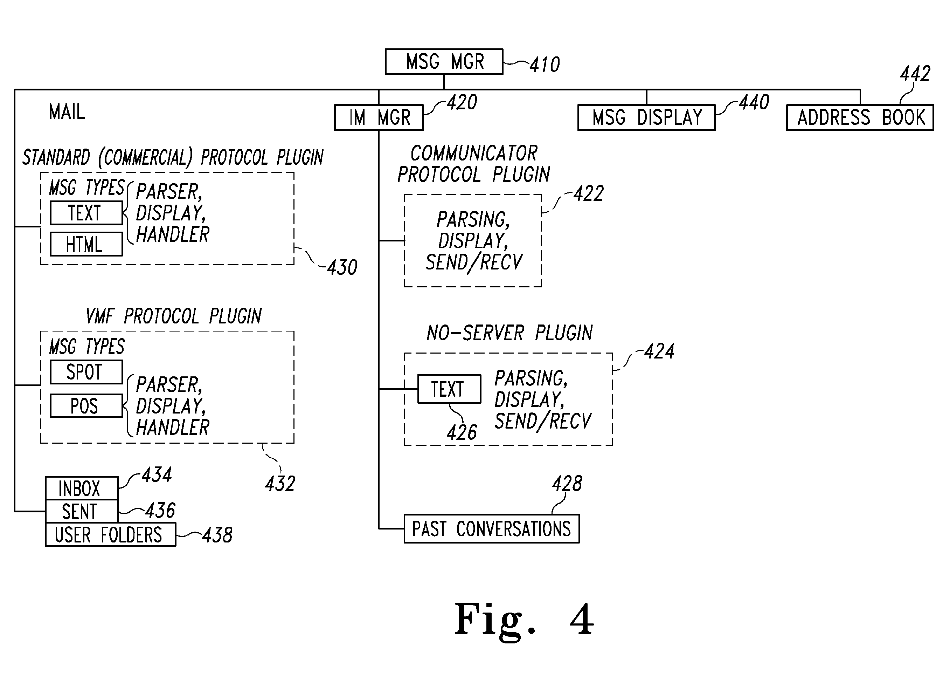

Figure 4 is a hierarchy diagram showing exemplary groupings of message plugins. A message manager 410 provides a single messaging interface to handle all messages, regardless of protocol or network. The messaging interface has two basic modes: instant messaging (IM) and mail boxes. An IM manager 420 includes a communicator protocol plugin 422 having parsing, display, and send/receive functions. A no-server plugin 424 also has parsing, display, and send/receive functions, as well as a text program 426. The IM manager 420 also includes a past conversations folder 428.

A mail box manager includes a standard protocol plugin 430 for message types such as text (parser, display, handler), and hypertext markup language (HTML). A VMF protocol plugin 432 is provided for message types such as SPOT (report of a potential threat) and POS (report of a friendly's location). The POS provides parser, display, and handler functions. The mail box manager also provides an inbox 434, a sent items folder 436, and user folders 438. The message manager 410 also provides a message display manager 440 and an address book 442.

In sending messages, a user can select recipients and message type. The message types are independent of message-passing protocol. Thus, the user just needs to specify the fields. The messaging protocols package and send messages across the network. Incoming mail messages create items-of-interest, *e*.*g*., a medivac request or a friendly position report. The plugins for message types understand how to read and compose the messages. A display screen for a user can have a message watch window, message control window, and messaging display window.

### Exemplary Implementations

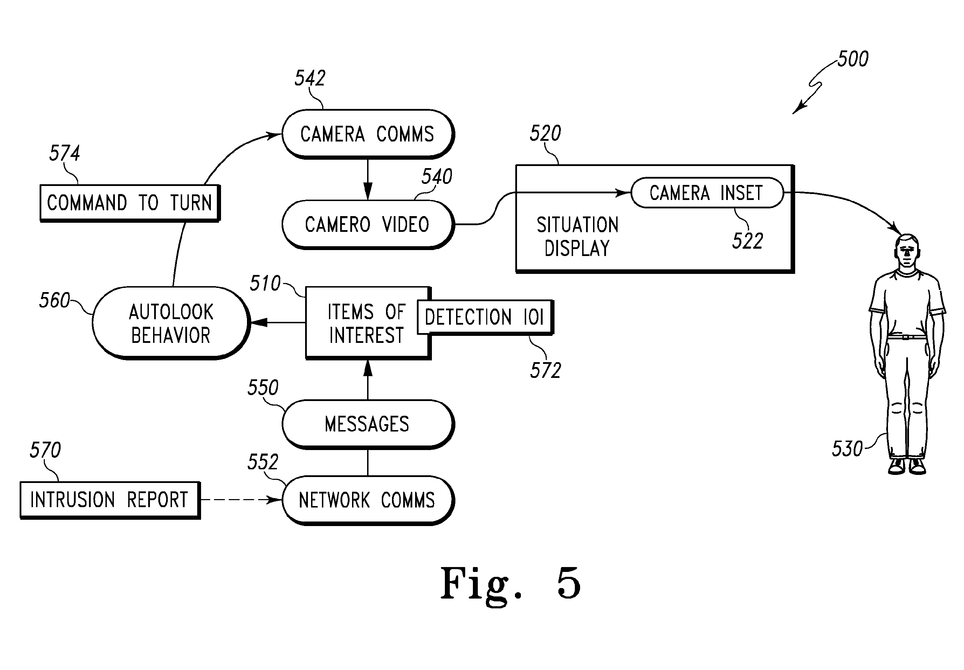

Figure 5 depicts an information fusing system 500 that is implemented with an automated function to point the nearest camera at a reported intruder. The system 500 has a database module 510 with one or more items-of-interest. A situation display module 520 includes a camera inset plugin 522 that allows a user 530 to view a camera feed. A camera video plugin 540 is in operative communication with camera inset plugin 522. The camera video plugin 540 is also operatively coupled to a camera communications plugin 542. A messages plugin 550 is in operative communication with database module 510 and is operatively coupled to a network communications plugin 552. An autolook behavior plugin 560 is in operative communication with database module 510 and camera communications plugin 542.

During operation of system 500, an intrusion report 570 is sent to network communications plugin 552, which posts a corresponding detection IOI 572 in database module 510 through messages plugin 550. The autolook behavior plugin 560 sees IOI 572 and picks the closest available camera. The autolook behavior plugin 560 sends a command to turn 574 to the camera, through camera communications plugin 542 and camera video plugin 540, to look at the intruder location. The camera inset plugin 522 provides the user 530 with a view of the intruder location on a display screen.

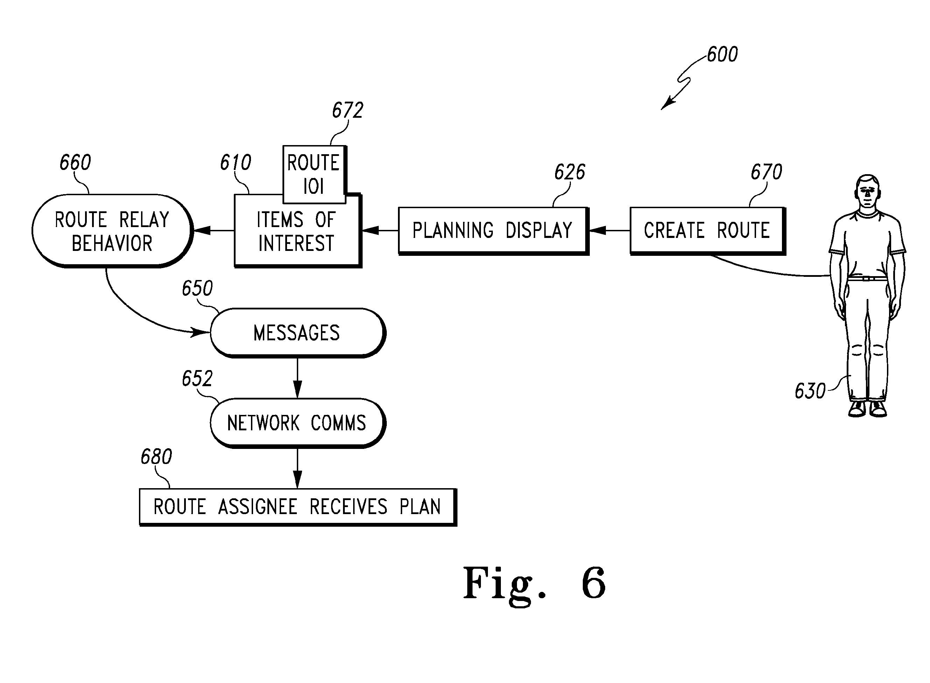

Figure 6 depicts an information fusing implementation 600 in which a user builds a route plan on a map. The implementation 600 utilizes a database module 610 with one or more items-of-interest. A planning display module 626 allows a user 630 to open a planning display. A messages plugin 650 is operatively coupled to a network communications plugin 652. A route relay behavior plugin 660 is in operative communication with database module 610 and messages plugin 650.

During operation of implementation 600, the user 630 opens the planning display, which shows friendly positions and assets. The user creates a route plan 670 and picks waypoints on a displayed map. As the user creates route plan 670, a route IOI 672 with waypoints is created and the route is drawn on the map. The user assigns the route to a unit which becomes part of IOI 672. The route relay behavior plugin 660 sees the new route from route IOI 672, and sends a command message to the unit through messages plugin 650. The route assignee unit receives the route plan at 680 from network communications plugin 652.

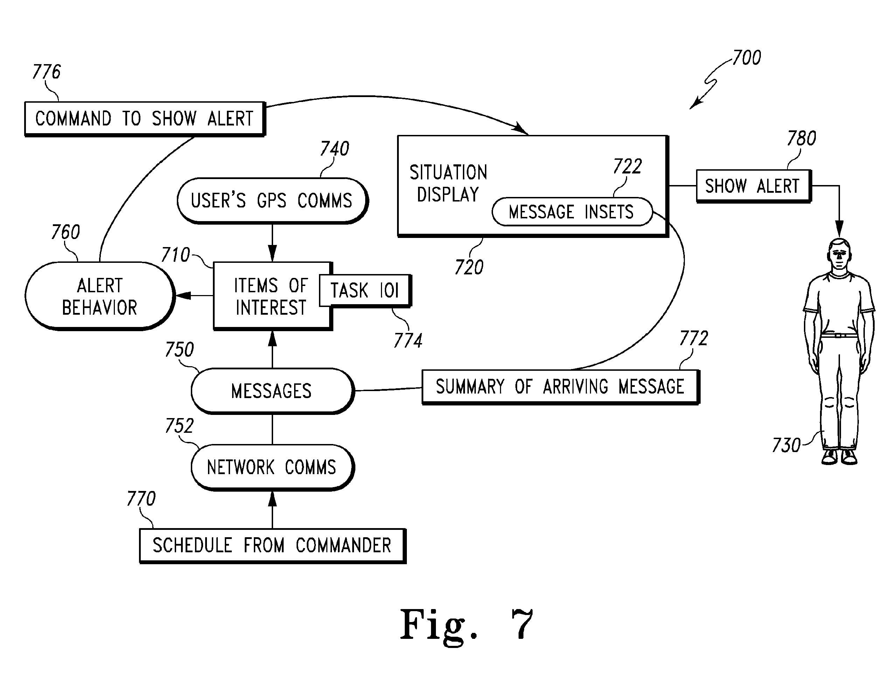

Figure 7 depicts an information fusing implementation 700 in which an automated function alerts a user when a new task has arrived. The implementation 700 utilizes a database module 710 with one or more items-of-interest. A situation display module 720 includes a message insets plugin 722 that allows a user 730 to view a message. A GPS with the user includes a GPS communications module 740 in operative communication with database module 710. A messages plugin 750 is operatively coupled to a network communications plugin 752. An alert behavior plugin 760 is in operative communication with database module 710 and situation display module 720.

During operation of implementation 700, the alert behavior plugin 760 listens for new schedules and tasks for the user. A message 770, such as a schedule from a commander, is sent through network communications plugin 752 to messages plugin 750. A summary 772 of the arriving message such as a schedule is sent from messages plugin 750 to message insets plugin 722, and a related task IOI 774 is generated in database module 710. The alert behavior plugin 760 looks at task IOI 774 to determine if a new task has been assigned to the user. When a new task for the user has arrived, a command to show alert 776 is sent from alert behavior plugin 760 to situation display module 720. The user is then shown the alert at 780. For example, if the user needs to arrive at a prescribed destination by a certain deadline, an alert signal can be shown to the user indicating arrival of this schedule. If the user is not near the destination by the deadline, an alert signal can also be given to the user at this point.

### Exemplary Field Uses

The present system can be utilized in a wide range of applications. For example, the system can be utilized in search and rescue operations to establish coverage, monitor danger, locate people, and coordinate rescue. Exemplary field users in such operations can include police and fire departments, the Coast Guard, helicopter para-rescue jumpers, National Parks rescue teams, other rescue teams.

The present system can also be used in commercial and government site security operations. These operations have known fixed sites, sensors, and networks to monitor grounds and personnel, and have teams in place to respond to alerts and unauthorized intruders. Exemplary field users in such operations can include nuclear site and shipment security, municipal and international harbor security, airport security, security for commercial/general aviation overseas, security for corrections officers, corporate grounds security, aircraft anti-tampering security, military base security, and missile silo security.

The present system can also be used in industrial maintenance operations. These operations have sensors amongst equipment, such as for oil and chemical process monitoring, which can alert mobile technicians and provide data to a technician on-the-spot. In addition, the present system can be used by oil refinery security and chemical plant security.

Further, the present system can be utilized in tactical situation awareness, such as for combat during wartime or police operations. Such situations typically have new territory, and loose sensor and network coverage. The system can be used to remotely place sensors and networks, identify threats such as locating hostiles, and coordinate a response to the situation. Exemplary tactical field users can include special weapons and tactic (SWAT) units, Army and Marine squad and platoon command/control and overwatch (*e*.*g*., MAVs), special forces troops such as the Navy SEALs and Army Rangers, and the like.

In addition, the present system can be used in monitoring the perimeter of Navy "battle force" ships by small UAVs, as part of the Future Combat Systems (FCS) dismount control device (DCD) for small UAVs, and for counter-improvised explosive device (counter-IED) measures. The present system can also be used by platoon and company commanders to understand and share situations. For example, the system can be employed to reduce fratricide by displaying an overlay of friendlies with selected targets.

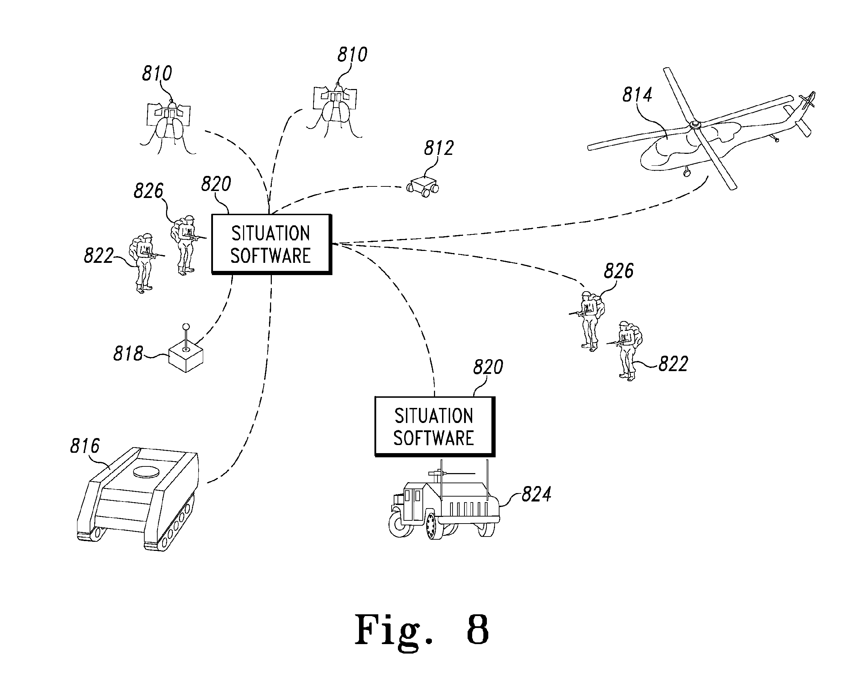

Figure 8 is a schematic diagram of an exemplary field use of the system of the invention in a military operation. Various assets are deployed in the field, such as a plurality of UAVs 810, at least one UGV 812, at least one helicopter 814, at least one all-terrain mobile vehicle 816, and at least one unattended ground sensor 818. Situation software 820 such as described previously is implemented in portable devices carried by users such as armed personnel 822 and a command vehicle 824. The portable devices have a situation display that can show maps with icons for assets, network reports, and items-of-interest. The armed personnel 822 can also carry personnel trackers 826.

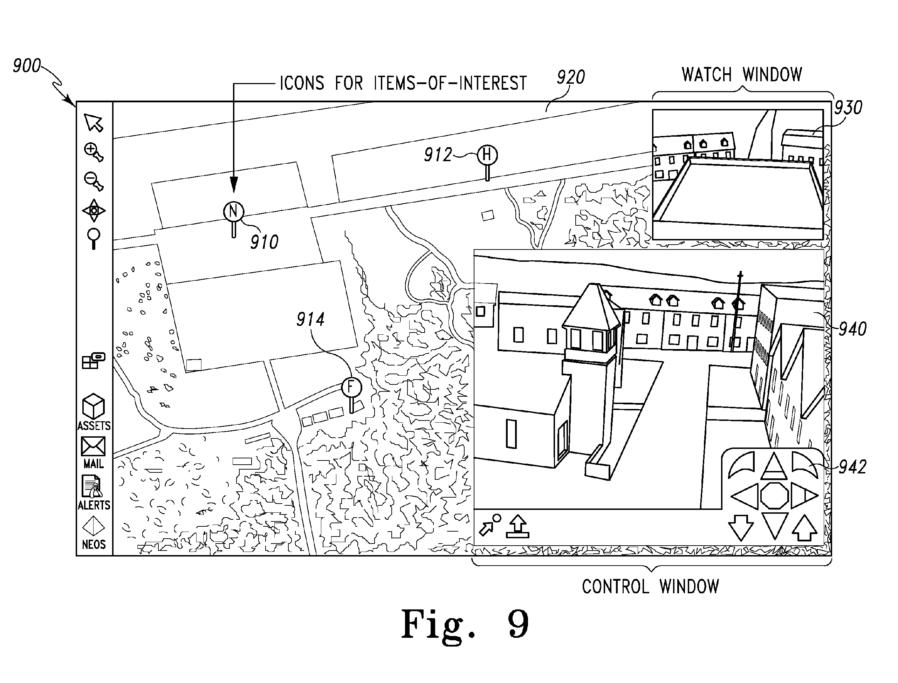

An exemplary situation display screen 900 is depicted in Figure 9. The display screen 930 shows icons 910, 912, and 914 for IOIs overlayed on a map 920. The user can pick assets or messaging to show in a watch window 930. The user can also pick assets or messaging to show in a control window 940 which provides simplified controls 942 for controlling assets or messaging. For example, an authorized user can control a UAV using control window 940.

The use of IOIs in the present system provides many benefits, such as allowing any software function to "discover" data of interest; providing a first level for transforming data into information such as by supporting sensor fusion; and allowing for large systems where functions can be added or removed without changing the information sharing protocols. In addition, completely different functions can share relevant data from many sources using the common location, access, and content/format of IOIs. For example, the system can be used to automatically send a maintenance team to investigate a refinery sensor alert. In another example, the system can be employed to label a sensor track as a target, and convey this information to a military network.

Instructions for carrying out the various process tasks, calculations, and generation of signals and other data used in the operation of the systems and methods of the invention can be implemented in software, firmware, or other computer readable instructions. These instructions are typically stored on any appropriate computer readable medium used for storage of computer readable instructions or data structures. Such computer readable media can be any available media that can be accessed by a general purpose or special purpose computer or processor, or any programmable logic device.

Suitable computer readable media may comprise, for example, non-volatile memory devices including semiconductor memory devices such as EPROM, EEPROM, or flash memory devices; magnetic disks such as internal hard disks or removable disks; magneto-optical disks; CDs, DVDs, or other optical storage disks; nonvolatile ROM, RAM, and other like media; or any other media that can be used to carry or store desired program code means in the form of computer executable instructions or data structures. Any of the foregoing may be supplemented by, or incorporated in, specially-designed application-specific integrated circuits (ASICs), or field programmable gate arrays (FPGAs). When information is transferred or provided over a network or another communications connection (either hardwired, wireless, or a combination of hardwired or wireless) to a computer, the computer properly views the connection as a computer readable medium. Thus, any such connection is properly termed a computer readable medium. Combinations of the above are also included within the scope of computer readable media.

The system of the invention can be implemented in computer readable instructions, such as program modules or applications, which are executed by a data processor. Generally, program modules or applications include routines, programs, objects, data components, data structures, algorithms, etc. that perform particular tasks or implement particular abstract data types. These represent examples of program code means for executing steps of the methods disclosed herein. The particular sequence of such executable instructions or associated data structures represent examples of corresponding acts for implementing the functions described in such steps.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A system for fusing information from disparate data sources, the system comprising:
a database module operative to maintain an information database identifying one or more items-of-interest;
a situation display module in operative communication with the database module;
an asset data plugin in operative communication with the database module;
an asset communications plugin operatively coupled to the asset data plugin, the asset communications plugin configured to communicate with one or more assets;
a messages plugin in operative communication with the database module;
a network communications plugin operatively coupled to the messages plugin, the network communications plugin configured to communicate with one or more networks; and
an automated behaviors plugin in operative communication with the database module, the asset communications plugin, and the network communications plugin;
wherein the situation display module, the asset data plugin, the messages plugin, and the automated behaviors plugin are all configured to transmit one or more items-of-interest to the database module or listen for one or more items-of-interest in the database module.

2. The system of claim 1, further comprising a planning display module in operative communication with the database module, and a message display module in operative communication with the database module.

3. The system of claim 1, wherein the situation display module comprises an asset insets plugin in operative communication with the asset data plugin, and a message insets plugin in operative communication with the messages plugin.

4. The system of claim 1, wherein the information database comprises a software blackboard, and the items-of-interest each comprise a synopsis of information.

5. The system of claim 3, wherein the asset data plugin comprises a camera video plugin.

6. The system of claim 5, wherein the asset communications plugin comprises a camera communications plugin, and the asset insets plugin comprises a camera inset plugin.

7. The system of claim 5, wherein the automated behaviors plugin comprises an autolook behavior plugin.

8. The system of claim 1, wherein the automated behaviors plugin comprises a route relay behavior plugin.

9. The system of claim 1, wherein the automated behaviors plugin comprises an alert behavior plugin.

10. The system of claim 1, wherein the asset data plugin is configured for one or more assets selected from the group consisting of an unmanned aerial vehicle, an unattended ground sensor, an unmanned ground vehicle, and a personnel tracker.
